# EUROPEAN PATENT SPECIFICATION

(11) **EP 3 537 209 B1**
(45) Date of publication and mention of the grant of the patent: **15.09.2021**
(21) Application number: 17842410.7
(22) Date of filing: 20.07.2017
(51) Int. Cl.: G02F 1/1337, G02F 1/1343, G09G 3/36, G02F 1/1362

(54) **ARRAY SUBSTRATE COMPRISING A SUBPIXEL UNIT, CONTROL METHOD THEREFOR, AND DISPLAY DEVICE**
ARRAYSUBSTRAT MIT SUBPIXELEINHEIT, STEUERUNGSVERFAHREN DAFÜR UND ANZEIGEVORRICHTUNG
SUBSTRAT DE MATRICE COMPRENANT UNE UNITÉ DE SOUS-PIXEL, PROCÉDÉ DE PILOTAGE ASSOCIÉ ET DISPOSITIF D'AFFICHAGE

(30) Priority: 10.01.2017 WO PCT/CN2017/001767
(43) Date of publication of application: 11.09.2019
(73) Proprietor: BOE Technology Group Co., Ltd., Beijing 100015 (CN); Hefei Xinsheng Optoelectronics Technology Co., Ltd, Anhui 230012 (CN)
(72) Inventor: JIANG, Liangliang, Beijing 100176 (CN); GAN, Quan, Beijing 100176 (CN)
(74) Representative: AWA Sweden AB
(86) International application number: PCT/CN2017/093658
(87) International publication number: WO 2018/129898

(56) References cited:
- EP-A1- 2 743 763
- CN-A- 102 629 056
- CN-A- 103 529 613
- CN-A- 105 759 516
- CN-U- 202 583 658
- CN-U- 205 581 478
- US-A1- 2003 117 016
- US-A1- 2009 009 449

## Description

### CROSS-REFERENCE TO RELATED APPLICATION

This application claims priority to Chinese Patent Application No. 201710017676.5 filed on January 10, 2017 in the State Intellectual Property Office of China.

### TECHNICAL FIELD

The present disclosure relates to the field of liquid crystal display technology, and particularly, to an array substrate comprising a sub-pixel unit, a method of controlling the sub-pixel unit and a display device.

### BACKGROUND

Currently, in the field of Thin Film Transistor-Liquid Crystal Display (TFT-LCD), IPS (In-Plane Switching) and FFS (Fringe Field Switching) modes are used more and more widely due to their advantages of wide visual angle, high transmittance, fast response and the like.

Regarding a liquid crystal display panel, transmittance Tᵣ and driving voltage Vₒₚ are important parameters which affect performance and competitiveness of products. Higher transmittance indicates that the backlight brightness is lower or the power consumption is lower, while higher driving voltage indicates that power consumption of the liquid crystal display panel is higher.

CN105759516 A discloses a display panel. As shown in Fig. 3 of that document, the display panel 200 includes a first substrate 210, a second substrate relative with first substrate 220, a liquid crystal molecule 240, a black matrix 221 and a first electrode layer. The first substrate array is provided with base plate 210 formed with gate line, data wire, and thin film transistor (TFT).

CN102629056 A discloses a tft liquid crystal display. As shown in Fig. 7 of that document, a strip pixel electrode 101 is provided a on second pixel electrode layer 101 divided into two symmetrical groups.

EP2743763 A1 discloses a pixel structure comprises a plurality of pixel regions, and each of the pixel regions includes first and second electrodes that are overlapped with each other.

US2009/009449 A1 discloses a display device, pixels are arranged in matrix, and a first luminance area (high luminance area) and a second luminance area (low luminance area) which surrounds the first luminance area and has a luminance lower than that of the first luminance area can be formed in each pixel. The preamble of claim 1 is based on this disclosure.

### SUMMARY

According to an aspect of the present disclosure, there is provided an array substrate as defined in claim 1. Advantageous embodiments are defined in the dependent claims.

According to another aspect of the present disclosure, there is also provided a display device. The display device comprises: any one of the abovementioned array substrate.

According to still another aspect of the present disclosure, there is also provided a method of controlling any one of the abovementioned sub-pixel unit as defined in claim 10.

### BRIEF DESCRIPTION OF THE DRAWINGS

FIG. 1 is a schematic view showing a sub-pixel unit which adopts a pixel structure having two symmetrical upper and lower domains and a pixel electrode of slit design.
FIG. 2 is a simulated diagram showing a relationship between a transmittance Tᵣ and a driving voltage Vₒₚ of the sub-pixel unit shown in FIG. 1.
FIG. 3 is a structural schematic view showing a sub-pixel unit according to an embodiment of the present disclosure.
FIG. 4 is a flow diagram showing a method of controlling the sub-pixel unit shown in FIG. 3.
FIG. 5 is a structural schematic view showing a pixel unit according to an embodiment of the present disclosure.
FIG. 6 is a schematic view showing a modification of the pixel unit shown in FIG. 5.
FIG. 7 is a schematic view showing an array of pixel units in an array substrate according to an embodiment of the present disclosure.
FIG. 8 is a schematic view showing an array of pixel units in an array substrate according to another embodiment of the present disclosure.

### DETAILED DESCRIPTION OF THE EMBODIMENTS

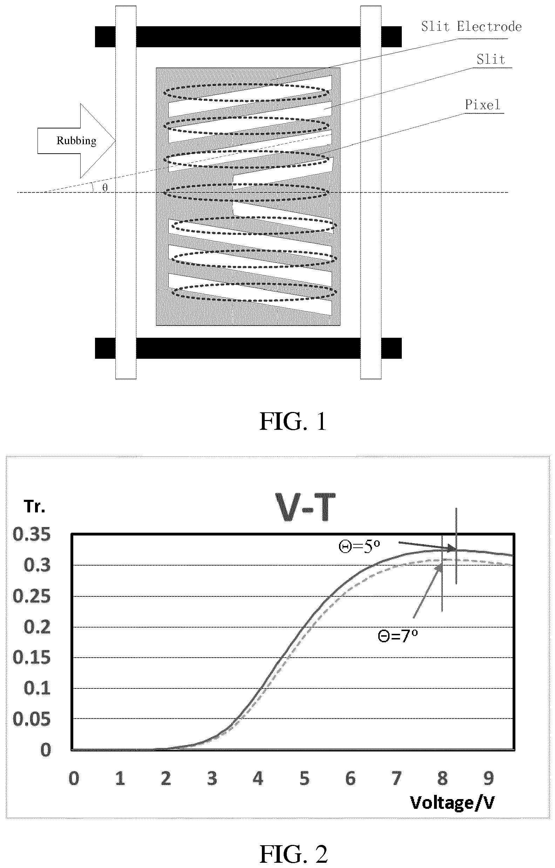

FIG. 1 is a schematic view showing a sub-pixel unit which adopts a pixel structure having two symmetrical upper and lower domains and a pixel electrode of slit design. As shown in FIG. 1, the sub-pixel unit adopts a pixel structure having two symmetrical upper and lower domains and a pixel electrode of slit design. For this sub-pixel unit, rubbing occurs in a horizontal direction, to induce liquid crystal molecules to align in the horizontal direction. Here, an included angle between a direction of a slit of the slit electrode and a direction where major axes of liquid crystal molecules are oriented in a unpowered state is named as initial twist angle. Based on different initial twist angles, a driving voltage and transmittance relationship curve (V-T curve) of the pixel is different.

FIG. 2 is a simulated diagram showing a relationship between a transmittance Tᵣ and a driving voltage Vₒₚ of the sub-pixel unit shown in FIG. 1. As shown in FIG. 2, in a pixel having an initial twist angle of 5°, the liquid crystal molecule has a higher transmittance Tᵣ and a higher driving voltage Vₒₚ, as well as higher luminance and power consumption. In a pixel having an initial twist angle of 7°, it has a lower transmittance Tᵣ and a lower driving voltage Vₒₚ, as well as lower luminance and power consumption.

In an existing TFT-LCD liquid crystal display panel, the double domain pixel structure has only one slit angle design of the slit electrode, which only corresponds to one voltage and transmittance (V-T) curve of the pixel. To meet different requirements of luminance and power consumption, it responses relatively slowly, so the applicability and usable range are greatly reduced.

Currently, an aim of designing a liquid crystal display panel is to pursue high transmittance, but the problem is that it inevitably increases power consumption. During actual working process of the liquid crystal display panel, in many cases, the pixels are required only to display in low gray scale and in low luminance, while more attention is paid on requirements of power consumption and energy savings. However, at present, a liquid crystal panel with a normal design of slit electrode and initial twist angle often has a single function and cannot achieve management and control of multi-level, multi-luminance and different power consumption requirements.

The present disclosure proposes a novel design of sub-pixel unit, which can be compatible with the requirements of high luminance and high power consumption as well as low luminance and low power consumption. Based on the design scheme of the sub-pixel unit, the present disclosure also provides a sub-pixel unit and a method of controlling the same, a pixel unit, an array substrate, and a display device.

In order to provide a more clear understanding of objects, technique solutions and advantages of the present disclosure, the present disclosure will be further described hereinafter in detail in conjunction with specific embodiments and with reference to the attached drawings.

According to one aspect of the present disclosure, there is provided a sub-pixel unit. The sub-pixel unit comprises: at least two subpixels. Each of the subpixels comprises: a first electrode; a second electrode; and a liquid crystal layer controlled by a voltage between the first electrode and the second electrode. At least one of the first electrode and the second electrode is a slit electrode. The two subpixels have different initial twist angles, and the initial twist angle is an included angle between a direction of a slit of the slit electrode and a direction where major axes of liquid crystal molecules are oriented when the liquid crystal layer is in a unpowered state, in the respective subpixel.

It should be note that, "initial twist angle" of a subpixel indicates: initial twist angle of liquid crystal molecules contained in a liquid crystal layer of the subpixel, more specifically, it indicates: in the subpixel, an included angle between a direction of a slit of the slit electrode and a direction where major axes of liquid crystal molecules are oriented when the liquid crystal layer is in a unpowered state.

For one pixel unit, it typically comprises: a red sub-pixel unit, a green sub-pixel unit and a blue sub-pixel unit. For some types of pixel units, the pixel unit may further comprise: a white sub-pixel unit. The above sub-pixel unit may be: any one of the red sub-pixel unit, the green sub-pixel unit, the blue sub-pixel unit and the white sub-pixel unit, or else may be other types of sub-pixel units. Moreover, the sub-pixel unit may comprise two subpixels, or else may comprise three, four, five or more subpixels, as long as two of these subpixels have different initial twist angles, all of which are within the scope of the present disclosure.

For the first electrode and the second electrode, they indicate electrode layers which are located on either side of the liquid crystal layer and for supplying the liquid crystal layer with control voltage. Types, materials and the likes of the first electrode and the second electrode are not limited in the embodiments of the present disclosure. For the slit electrode and the pixel layer and the likes, there are general meanings for them in the art, which is not to be discussed herein. The slit electrode may be provided in the first electrode, or may be provided in the second electrode.

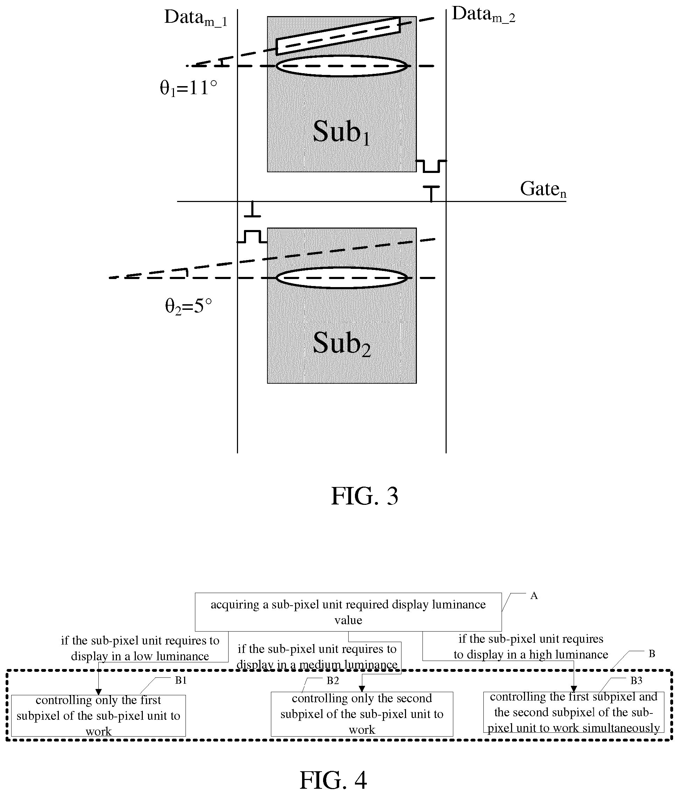

In an exemplary embodiment of the present disclosure, there is provided a sub-pixel unit. FIG. 3 is a structural schematic view showing a sub-pixel unit according to an embodiment of the present disclosure. As shown in FIG. 3, in this embodiment, the sub-pixel unit comprises a first subpixel Sub₁ and a second subpixel Sub₂. The first subpixel Sub₁ has an initial twist angle of θ₁; the second subpixel Sub₂ has an initial twist angle of θ₂; θ₁≠θ₂.

Taking light efficiency of the liquid crystal layer and transmittance of the liquid crystal panel into consideration, the initial twist angle of the subpixel is preferably less than 15°. Typically, the initial twist angles of the two subpixels are two different ones selected from a group consisting of 5°, 7°, and 11°. For a sub-pixel unit comprising a first subpixel and a second subpixel, values of the initial twist angle may be as follows.
(1) The first subpixel has an initial twist angle θ₁ of 5° , and the second subpixel has an initial twist angle θ₂ of 7°.
(2) The first subpixel has an initial twist angle θ₁ of 7° , and the second subpixel has an initial twist angle θ₂ of 11°.
(3) The first subpixel has an initial twist angle θ₁ of 5° , and the second subpixel has an initial twist angle θ₂ of 11°.

In this embodiment, the initial twist angle θ₁ of the first subpixel Sub₁ is 11°, and the initial twist angle θ₂ of the second subpixel Sub₂ is 5°. The sub-pixel unit can be operated in one of the following four working modes.
(1) In a first working mode, the first subpixel Sub₁ works while the second subpixel Sub₂ does not work, in this case, the transmittance is relatively low and the power consumption is low.
(2) In a second working mode, the first subpixel Sub₁ does not work while the second subpixel Sub₂ works, in this case, the transmittance increases and the power consumption increases.
(3) In a third working mode, the first subpixel Sub₁ and the second subpixel Sub₂ work simultaneously, in this case, the transmittance reaches a maximum, and, it displays in a maximum luminance, so the power consumption also reaches a maximum.
(4) In a fourth working mode, both the first subpixel Sub₁ and the second subpixel Sub₂ do not work, in this case, the sub-pixel unit is completely opaque.

Please referring to FIG. 3, for the sub-pixel unit according to this embodiment, the first subpixel Sub₁ and the second subpixel Sub₂ share one gate line Gateₙ to control gate signal of a corresponding thin-film transistor, and adopt two data lines Data_{m_1} and Data_{m_2} to provide data signals, respectively, to achieve independent controls of the first subpixel and the second subpixel.

On the basis of the abovementioned sub-pixel unit, the present disclosure also provides a method of controlling a sub-pixel unit. In this method, the first subpixel and the second subpixel are controlled independently and respectively in accordance with sub-pixel unit required display luminance value.

FIG. 4 is a flow diagram showing a method of controlling the sub-pixel unit shown in FIG. 3. Please referring to FIG. 4, according to this embodiment, the method of controlling the sub-pixel unit comprises:
a step A of, acquiring a sub-pixel unit required display luminance value Δ; and
a step B of, selecting a corresponding working mode from a group of arrangements of the at least two subpixels, according to the sub-pixel unit required display luminance value Δ.

Specifically, a first luminance threshold Δ1 and a second luminance threshold Δ2 are preset, and Δ1>Δ2, the step B comprises the following.

There is a sub-step B1 of, judging, if Δ<Δ2, that the sub-pixel unit requires to display in a low luminance, and controlling only the first subpixel of the sub-pixel unit to work.

Since the initial twist angle in the first subpixel is relatively great, the transmittance is relatively low, at the same time, the power consumption for driving the panel is relatively low, which achieves energy saving.

There is a sub-step B2 of, judging, if Δ2≤Δ<Δ1, that the sub-pixel unit requires to display in a medium luminance, and controlling only the second subpixel of the sub-pixel unit to work.

Since the initial twist angle in the second subpixel is relatively small, the transmittance increases, at the same time, the power consumption for driving the panel increases slightly.

There is a sub-step B3 of, judging, if Δ≥Δ1, that the sub-pixel unit requires to display in a high luminance, and controlling the first subpixel and the second subpixel of the sub-pixel unit to work simultaneously.

In this case, transmittance of the sub-pixel unit as a whole greatly increases, which achieves a high luminance displaying.

The above merely illustrates one method of controlling the sub-pixel unit, as an example, however, those skilled in the art can envisage other types of controlling methods based on the above description, and it is not discussed in detail herein.

Thus it can be see, in this embodiment, the sub-pixel unit is designed to include two subpixels having different initial twist angles, and the two subpixels are controlled respectively, which can be compatible with the requirements of high luminance and high power consumption as well as low luminance and low power consumption so that the liquid crystal display device has wider applicability and usable range.

On the basis of the abovementioned sub-pixel unit, according to another aspect of the present disclosure, there is also provided a pixel unit. The pixel unit comprises several sub-pixel units, and at least one of the several sub-pixel units is the aforementioned sub-pixel unit provided according to embodiments of the present disclosure.

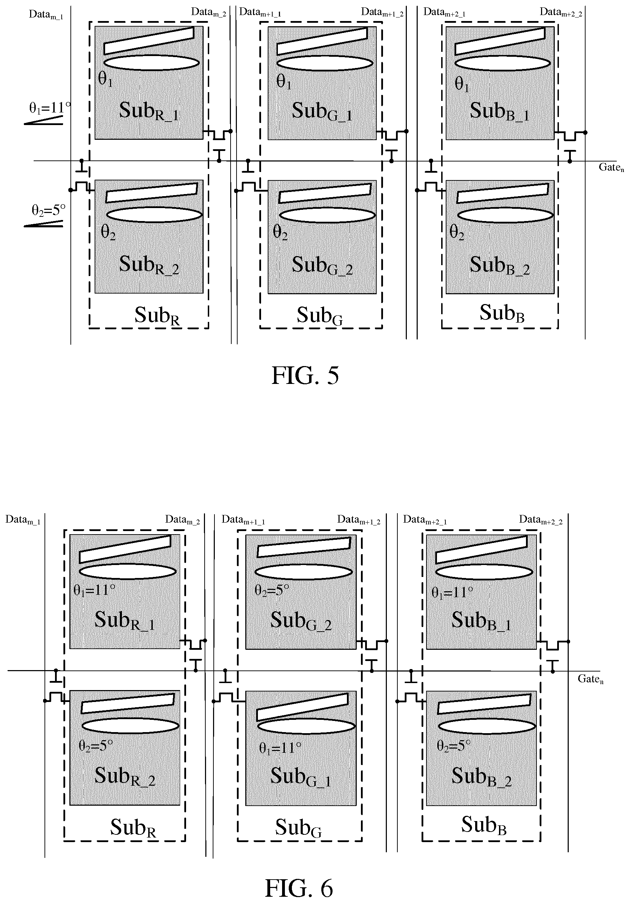

In an exemplary embodiment of the present disclosure, there is provided a pixel unit. FIG. 5 is a structural schematic view showing a pixel unit according to an embodiment of the present disclosure. As shown in FIG. 5, in this embodiment, the pixel unit comprises: a red sub-pixel unit Sub_{R}, a green sub-pixel unit Sub_{G} and a blue sub-pixel unit Sub_{B}. The three sub-pixel units are the ones according to the abovementioned embodiments. Namely, the red sub-pixel unit Sub_{R} comprises: the first red subpixel Sub_{R_1} and the second red subpixel Sub_{R_2}; the green sub-pixel unit Sub_{G} comprises: the first green subpixel Sub_{G_1} and the second green subpixel Sub_{G_2}; and the blue sub-pixel unit Sub_{B} comprises: the first blue subpixel Sub_{B_1} and the second blue subpixel Sub_{B_2}.

The first red subpixel Sub_{R_1} of the red sub-pixel unit, the first green subpixel Sub_{G_1} of the green sub-pixel unit and the first blue subpixel Sub_{B_1} of the blue sub-pixel unit have the same initial twist angle, of θ₁=11°. The second red subpixel Sub_{R_2} of the red sub-pixel unit, the second green subpixel Sub_{G_2} of the green sub-pixel unit and the second blue subpixel Sub_{B_2} of the blue sub-pixel unit have the same initial twist angle, of θ₂=5°.

It can be understood by those skilled in the art that,
(1) in the present embodiment, the description is implemented by taking a pixel unit including the red sub-pixel unit Sub_{R}, the green sub-pixel unit Sub_{G} and the blue sub-pixel unit Sub_{B} as an example, however, for the pixel unit consisted of other types of sub-pixel units, as long as it is satisfied that one of the sub-pixel units includes two subpixels having different initial twist angles, all of which are within the scope of the present disclosure;
(2) in the present embodiment, three sub-pixel units of the pixel unit each is the sub-pixel unit including two subpixels having different initial twist angles, however, the present disclosure can also be implemented if only some or even one of the sub-pixel units meets this condition;
(3) in the present embodiment, the first subpixels of the three sub-pixel units have the same initial twist angle and the second subpixels have the same initial twist angle, which is only a preferred implementation of the present disclosure, and it is not limited by the present disclosure that first (second) initial twist angles of the sub-pixel units are the same, in other embodiments of the present disclosure, first (second) initial twist angles of different sub-pixel units may be set to be different, which will not affect implementation of the present disclosure;
(4) for the initial twist angles θ₁ and θ₂, those skilled in the art can set them according to requirements, and they are not limited to θ₁=11° and θ₂=5° as mentioned above.

Please see FIG. 5, for each sub-pixel unit of the pixel unit according to the present embodiment, its two subpixels share one gate line (Gate)to control gate signal of a corresponding thin-film transistor, and adopt two data lines (Data) to provide data signals, respectively, to achieve independent controls of the first subpixel and the second subpixel.

Green sub-pixel unit Sub_{G} is taken as an example, its first green subpixel Sub_{G_1} and second green subpixel Sub_{G_2} share a gate line Gateₙ, and the data signals are provided by the data lines Data_{m+1_1} and Data_{m+1_2}, respectively.

Please continue to see FIG. 5, in the pixel unit according to the present embodiment, two subpixels of the same sub-pixel unit are arranged in a direction of data lines, and first (second) subpixels of the sub-pixel units are arranged sequentially in the same row along a direction of gate lines. It should be understood by those skilled in the art that, the abovementioned direction of data lines and the direction of gate lines are presented as a particular case, it is merely required that the two directions are neither coincident with nor parallel to each other.

FIG. 6 is a schematic view showing a modification of the pixel unit shown in FIG. 5. In the pixel unit shown in FIG. 6, the first subpixels and the second subpixels of different sub-pixel units are arranged alternately in the same row along the direction of gate lines. In addition, in another modification of the pixel unit, the first subpixels and the second subpixels of different sub-pixel units are arranged randomly in the same row along the direction of gate lines. The two modifications can implement the present disclosure as the pixel unit shown in FIG. 4.

The pixel unit according to the present embodiment has all advantages of the sub-pixel unit according to the abovementioned embodiments, and they are not discussed repeatedly herein.

According to another aspect of the present disclosure, there is also provided an array substrate. The array substrate comprises: a base substrate; gate lines and data lines formed on the base substrate; and an array of pixel units, wherein, the array of pixel units is disposed on the base substrate and comprises a plurality of pixel units arranged in array. In the embodiments, the pixel unit is the abovementioned pixel unit.

Hereinafter, in order to facilitate the description, a direction of data lines in the array substrate is defined as a first direction, and a direction of gate lines is defined as a second direction.

It should be explained that, in the present embodiment, it is defined that, the first direction is the direction of data lines, the second direction is the direction of gate lines, and the first direction and the second direction are perpendicular to each other, however, it is limited to this. In other embodiments of the present disclosure, the first direction is not necessarily the direction of data line and the second direction is not necessarily the direction of gate lines, as long as it is satisfied that the first direction and the second direction are neither coincident with nor parallel to each other.

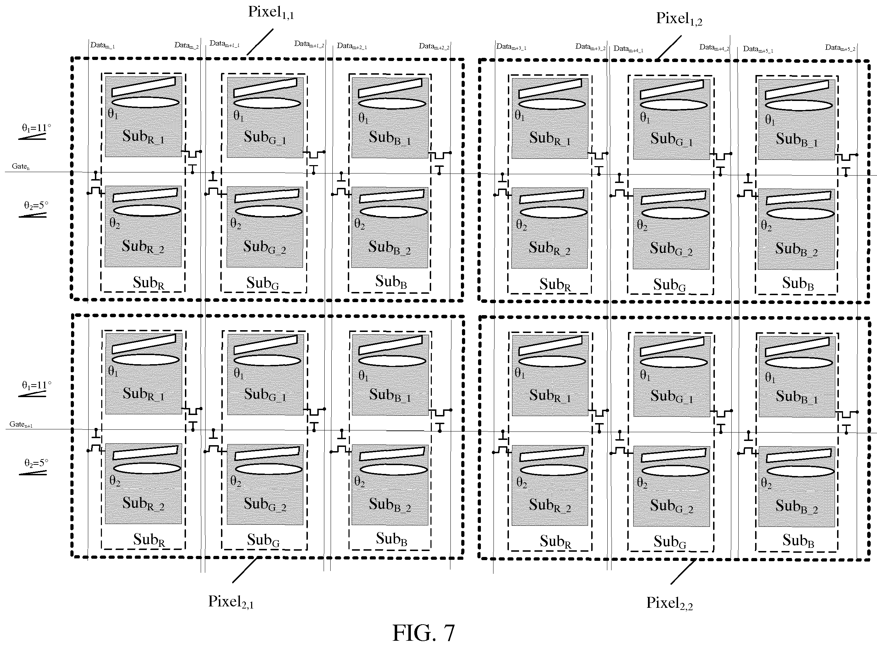

On the basis of the pixel unit shown in FIG. 5, according to an embodiment of the present disclosure, there is provided an array substrate. FIG. 7 is a schematic view showing an array of pixel units in an array substrate according to an embodiment of the present disclosure. In the array of pixel units as shown in FIG. 7, an arrangement of red R, green G, and blue B stripes is taken as an example, which presents four pixel units, Pixel_{1,1}, Pixel_{1,2}, Pixel_{2,1} and Pixel_{2,2}. Each pixel unit comprises: a red sub-pixel unit Sub_{R}, a green sub-pixel unit Sub_{G} and a blue sub-pixel unit Sub_{B}. For any one of the red sub-pixel unit Sub_{R}, the green sub-pixel unit Sub_{G} and the blue sub-pixel unit Sub_{B}, it comprises: a first subpixel and a second subpixel adjacent to each other and arranged in the first direction. And, the first subpixels of the sub-pixel units have the same initial twist angle, of θ₁=11°, and the second subpixels of the sub-pixel units have the same initial twist angle, of θ₂=5°.

In the second direction, the first subpixels of different sub-pixel units are arranged sequentially, or the second subpixels of different sub-pixel units are arranged sequentially. For example, it is shown in FIG. 7 as follows.
(1) In a first row, first red subpixels Sub_{R_1} of the red sub-pixel units, first green subpixels Sub_{G_1} of the green sub-pixel units, and first blue subpixels Sub_{B_1} of the blue sub-pixel units are arranged sequentially and circularly.
(2) In a second row, second red subpixels Sub_{R_2} of the red sub-pixel units, second green subpixels Sub_{G_2} of the green sub-pixel units, and second blue subpixels Sub_{B_2} of the blue sub-pixel units are arranged sequentially and circularly.

Deduced from the above by analogy, the array of pixel units in a display region of the array substrate according to the present embodiment is formed.

Please continue to see FIG. 5 and FIG. 7, for one sub-pixel unit, its two subpixels share one gate line (Gate) to control gate signal of a corresponding thin-film transistor, and adopt two data lines (Data) to provide data signals, respectively, to achieve independent controls of the first subpixel and the second subpixel.

For example, for the red sub-pixel unit Sub_{R} of the pixel unit Pixel_{1,1} in the top left, it comprises: a first red subpixel Sub_{R_1} and a second red subpixel Sub_{R_2}, which are arranged in the direction of data lines. The first red subpixel Sub_{R_1} and second red subpixel Sub_{R_2} share one gate line Gateₙ to control gate signal of a corresponding thin-film transistor, while, the first red subpixel Sub_{R_1} is provided with data signal through the data line Data_{m_1}, and the second red subpixel Sub_{R_2} is provided with data signal through the data line Data_{m_2}.

The array substrate according to the present embodiment may be an array substrate with an IPS mode or an FFS mode. In this case, each subpixel comprises: a pixel electrode and a common electrode separated by an insulation layer; one of the pixel electrode and the common electrode is a slit electrode. Preferably, the pixel electrode serves as the slit electrode. For an in-plane display technology, generally, an arrangement in which two electrodes both are slit electrodes is not adopted.

By adopting the arrangement of the subpixels according to the present embodiment, which is simple in arrangement rule, the manufacturing process is simplified accordingly and the signal control is eased. However, it should be noted that, once voltage in some gate line is not stable, all the subpixels on this gate line will be adversely affected, so that a situation where luminance in a whole line in this position is either relatively high or relatively low occurs in the display region, thereby adversely affecting the display effect.

On the basis of the pixel unit shown in FIG. 6, according to another embodiment of the present disclosure, there is provided an array substrate. The present embodiment is similar to the above embodiment of the array substrate, excepting in that, in the same row within the display region, the first subpixels and the second subpixels are arranged alternately.

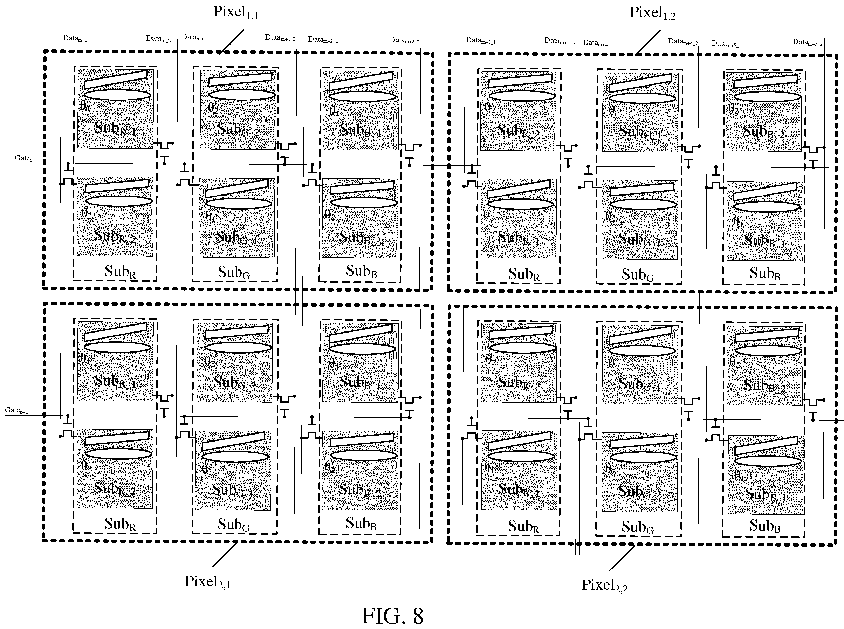

FIG. 8 is a schematic view showing an array of pixel units in an array substrate according to another embodiment of the present disclosure. In the array of pixel units as shown in FIG. 8, an arrangement of red R, green G, and blue B stripes is also taken as an example. The red R, green G, and blue B sub-pixel units in the array substrate are specifically divided into two kinds of subpixels: first subpixels and second subpixels. In the same kind of subpixels, slits of the slit electrodes have the same inclination angle. In these sub-pixel units, the first subpixels have the initial twist angle of 11°, the second subpixels have the initial twist angle of 5°, and the two in the same row are arranged alternately.

Please continue to see FIG. 8, for any one of the red sub-pixel unit Sub_{R}, the green sub-pixel unit Sub_{G} and the blue sub-pixel unit Sub_{B}, it comprises: a first subpixel and a second subpixel adjacent to each other and arranged in the first direction. In the same row along the second direction, first subpixels and second subpixels of different sub-pixels are arranged alternately. For example, it is shown in FIG. 8 as follows.
(1) In a first row, the first subpixel Sub_{R_1} of the red sub-pixel unit, the second subpixel Sub_{G_2} of the green sub-pixel unit, the first subpixel Sub_{B_1} of the blue sub-pixel unit, the second subpixel Sub_{R_2} of the red sub-pixel unit, the first subpixel Sub_{G_1} of the green sub-pixel unit, and the second subpixel Sub_{B_2} of the blue sub-pixel unit are arranged sequentially and circularly.
(2) In a second row, the second subpixel Sub_{R_2} of the red sub-pixel unit, the first subpixel Sub_{G_1} of the green sub-pixel unit, the second subpixel Sub_{B_2} of the blue sub-pixel unit, the first subpixel Sub_{R_1} of the red sub-pixel unit, the second subpixel Sub_{G_2} of the green sub-pixel unit, and the first subpixel Sub_{B_1} of the blue sub-pixel unit are arranged sequentially and circularly.

Deduced from the above by analogy, the array of pixel units in a display region of the array substrate according to the present embodiment is formed.

By adopting the arrangement of the subpixels according to the present embodiment, which is relatively complicated in arrangement rule, the manufacturing process and the signal control are relatively complicated accordingly, however, the situation where luminance in the whole line is either relatively high or relatively low, occurred in the display region, addressed in the first embodiment of the array substrate can be eliminated, thereby achieving a relatively better display effect.

On the basis of a pixel unit in which first subpixels and second subpixels of different sub-pixel units are arranged randomly, there is provided an array substrate according to yet another embodiment of the present disclosure. In the array substrate according to the present embodiment, for any one of the red subpixels, the green subpixels and the blue subpixels, the first subpixel and the second subpixel are arranged in the first direction; in the second direction, the first subpixels and the second subpixels of different sub-pixels are arranged randomly, that is, in the same row of the display region, the arrangement of the first subpixels and the second subpixels is random.

By adopting the arrangement of the subpixels according to the present embodiment, which is mostly complicated in arrangement rule, the manufacturing process and the signal control are mostly complicated accordingly, however, the situation where luminance in the whole line is either relatively high or relatively low, occurred in the display region, addressed in the above embodiment of the array substrate can be eliminated completely, thereby achieving a best display effect.

According to still another aspect of the present disclosure, there is further provided a display device. The display device comprises any one of the abovementioned array substrates.

Thus it can be seen from the above that, the sub-pixel unit and the method of controlling the same, the pixel unit, the array substrate, and the display device at least have one of the following advantages.
(1) A novel structure of sub-pixel unit is provided.
(2) The sub-pixel unit is designed to include two subpixels having different initial twist angles, and the two subpixels are respectively controlled to achieve management and control of multi-level, multi-luminance and different power consumption requirements, so that the liquid crystal display device has wider applicability and usable range.
(3) In the same row of effective display region of the array substrate along the second direction, first (second) subpixels of different sub-pixel units are arranged sequentially, in this case, arrangement rule is simple, the manufacturing process is simplified accordingly and the signal control is eased.
(4) In the same row of effective display region of the array substrate along the second direction, first and second subpixels of different sub-pixel units are arranged alternately, in this case, a situation where luminance in the whole line is either relatively high or relatively low, occurred in the display region once the voltage in some gate line is not stable, can be eliminated, thereby achieving a relatively better display effect.
(5) In the same row of effective display region of the array substrate along the second direction, first subpixels and second subpixels of different sub-pixel units are arranged randomly, in this case, a situation where luminance in the whole line is either relatively high or relatively low, occurred in the display region once the voltage in some gate line is not stable, can be eliminated completely, thereby achieving the best display effect.

To this, several embodiments of the present disclosure have been described in detail in conjunction with the attached drawings. In accordance with the above description, those skilled in the art should have a clear understanding on the sub-pixel unit and the method of controlling the same, the pixel unit, the array substrate, and the display device according to the present disclosure.

It should be noted that, all the implementations not shown or described in the drawings or the description are those known by those skilled in the art and are not described in detail. In addition, abovementioned definitions of these elements and methods are not limited to these specific configurations, forms or manners mentioned in the embodiments, and can be altered or replaced easily by those skilled in the art. For example,
(1) the number of subpixels in each sub-pixel unit may also be three, four or more;
(2) for the initial twist angle, other suitable angles may also be selected, in addition to the three listed in this description;
(3) for arrangement manner of the subpixels in the array substrate, those skilled in the art may envisage other arrangement manners based on the three listed in the embodiments, in addition to the three listed in the abovementioned embodiments.

Concerning the above, the present disclosure provides a pixel design and corresponding array substrate and display device, which are compatible with the display requirements of low luminance, medium luminance and high luminance, and a corresponding driving manner is adjusted accordingly, to meet power consumption requirement in different use environments. Accordingly, it can greatly improve applicability and usable range of the panel and enhance product competitiveness.

It should also be noted that, this description may provide examples of parameters that contain certain values, however, these parameters do not need to be exactly equal to corresponding values, but may be approximately the corresponding values within acceptable error tolerances or design constraints. Directional terminologies mentioned in the embodiments, for example, "upper", "lower" , "front", "rear" , "left", "right" and the likes are those shown in the figures, and are not intended to limit the scope of the present disclosure. In addition, unless otherwise specifically described or necessarily to occur in sequence, the order of the above steps is not limited to those listed above and may be varied or rearranged in accordance with required design. Moreover, based on considerations on design and reliability, the above embodiments may be mixed with each other or with other embodiments, that is, technical features described in different embodiments may be combined freely to form more embodiments.

It should be noted that, in the above embodiments, the word "comprise" does not exclude element(s) or step(s) which is/are not listed in the description. Elements defined by words "a/an" or "one" do not exclude a plurality of identical elements. The present disclosure can be implemented by means of hardware including several different elements or by means of computer that is suitably programmed. In a unit where several devices are listed, some of these devices can be embodied specifically by same hardware. Words such as first, second, third and the like are explained as definitions, instead of expressing or implying that there is any sequence between them.

Objects, technical solutions and advantages of the present disclosure have been further illustrated in the above specific embodiments. It should be understood that the above description is merely used to illustrate specific embodiments of the present disclosure, but not to limit the present invention as defined by the appended claims.

## Claims

1. An array substrate comprising:
a base substrate; and
an array of pixel units (Pixel 1,1; Pixel 1,2; Pixel2,1; Pixel2,2) disposed on the base substrate and comprising a plurality of pixel units arranged in array, wherein at least one pixel unit of the plurality of pixel units comprises several sub-pixel units, wherein at least one of the several sub-pixel units, comprises: at least two subpixels (Sub₁, Sub₂) ; wherein,
each of the at least two subpixels (Sub₁, Sub₂) comprises: a first electrode; a second electrode; and a liquid crystal layer arranged to be controlled by a voltage between the first electrode and the second electrode; at least one of the first electrode and the second electrode is a slit electrode; wherein the array substrate further comprises gate lines and data lines formed on the base substrate; and wherein, in the at least one pixel unit, two subpixels of the same sub-pixel unit share the same gate line and are controlled by different data lines, **characterised in that**
the at least two subpixels (Sub₁, Sub₂) have different initial twist angles, and the initial twist angle is an included angle between a direction of a slit of the slit electrode and a direction where major axes of liquid crystal molecules are oriented when the liquid crystal layer is in a unpowered state, in the respective subpixel.

2. The array substrate of claim 1, wherein, the at least two subpixels comprise: a first subpixel (Sub₁) and a second subpixel (Sub₂) ;
wherein, the first subpixel (Sub₁) has an initial twist angle of θ₁; the second subpixel (Sub₂) has an initial twist angle of θ₂; and, both the θ₁ and the θ₂ are less than 15° .

3. The array substrate of claim 2, wherein, the θ₁ and the θ₂ are two different ones selected from a group consisting of 5 ° , 7°, 11°.

4. The array substrate of any one of claims 1-3, wherein, the several sub-pixel units comprise: a red sub-pixel unit (Sub_{R}), a green sub-pixel unit (Sub_{G}) and a blue sub-pixel unit (Sub_{B});
the red sub-pixel unit comprises: a first red subpixel (Sub_{R_1}) and a second red subpixel (Sub_{R_2}) having different initial twist angles;
the green sub-pixel unit comprises: a first green subpixel (Sub_{G_1}) and a second green subpixel (Sub_{G_2}) having different initial twist angles; and
the blue sub-pixel unit comprises: a first blue subpixel (Sub_{B_1}) and a second blue subpixel (Sub_{B_2}) having different initial twist angles.

5. The array substrate of claim 4, wherein,
the first red subpixel (Sub_{R_1}), the first green subpixel (Sub_{G_1}) and the first blue subpixel (Sub_{B_1}) have the same initial twist angle of θ₁; and
the second red subpixel (Sub_{R_2}), the second green subpixel (Sub_{G_2}) and the second blue subpixel (Sub_{B_2}) have the same initial twist angle of θ₂.

6. The array substrate claim 5, wherein,
two subpixels (Sub₁, Sub₂) of the same sub-pixel unit are arranged in a first direction; and
the same type of subpixels (Sub₁ or Sub₂) of different sub-pixel units are arranged sequentially in a second direction that is neither coincident with nor parallel to the first direction, the first subpixels (Sub₁) and the second subpixels (Sub₂) of different sub-pixel units are arranged alternately in the second direction, or, the first subpixels (Sub₁) and the second subpixels (Sub₂) of different sub-pixel units are arranged randomly in the second direction.

7. The array substrate of claim 6
wherein, the first direction is along a direction of the data lines and the second direction is along a direction of the gate lines.

8. The array substrate of claim 6, wherein, the array substrate is an array substrate with an IPS mode or an FFS mode;
wherein the subpixel (Sub₁ or Sub₂) of the pixel unit comprises: a pixel electrode and a common electrode separated by an insulation layer; the first electrode is one of the pixel electrode and the common electrode, and the second electrode is the other of the pixel electrode and the common electrode.

9. A display device, **characterized by** comprising: the array substrate of any one of claims 1 - 8.

10. A method of controlling said at least one sub-pixel unit of the array substrate defined in any one of claims 1 to 8, wherein the method comprises:
a step A of, acquiring a sub-pixel unit required display luminance value; and
a step B of, selecting a corresponding working mode from a group of arrangements of the at least two subpixels (Sub₁, Sub₂), according to the sub-pixel unit required display luminance value, wherein the at least two subpixels comprises: a first subpixel (Sub₁) and a second subpixel (Sub₂), the first subpixel (Sub₁) has an initial twist angle of θ₁, the second subpixel (Sub₂) has an initial twist angle of θ₂, and, θ₁>θ₂;
the step B comprises:
a sub-step B1 of, judging, if Δ<Δ2, that the sub-pixel unit requires to display in a low luminance, and controlling only the first subpixel (Sub₁) of the sub-pixel unit to work;
a sub-step B2 of, judging, if Δ2≤Δ<Δ1, that the sub-pixel unit requires to display in a medium luminance, and controlling only the second subpixel (Sub₂) of the sub-pixel unit to work;
a sub-step B3 of, judging, if Δ≥Δ1, that the sub-pixel unit requires to display in a high luminance, and controlling the first subpixel (Sub₁) and the second subpixel (Sub₂) of the sub-pixel unit to work simultaneously;
in which, Δ is the sub-pixel unit required display luminance value, Δ1 is a first luminance threshold, Δ2 is a second luminance threshold, and Δ1> Δ2.

## Patentansprüche

1. Array-Substrat, das Folgendes umfasst:
ein Basissubstrat; und
ein Array von Pixeleinheiten (Pixel1,1; Pixel1,2; Pixel2,1; Pixel2,2), das auf dem Basissubstrat angeordnet ist und mehrere in dem Array angeordnete Pixeleinheiten enthält, wobei wenigstens eine Pixeleinheit der mehreren Pixeleinheiten mehrere Unterpixeleinheiten enthält, wobei wenigstens eine der mehreren Unterpixeleinheiten wenigstens zwei Unterpixel (Sub₁, Sub₂) enthält; wobei
jedes der wenigstens zwei Unterpixel (Sub₁, Sub₂) folgendes enthält: eine erste Elektrode; eine zweite Elektrode; und eine Flüssigkristallschicht, die dafür ausgelegt ist, durch eine Spannung zwischen der ersten Elektrode und der zweiten Elektrode gesteuert zu werden; wobei die erste Elektrode und/oder die zweite Elektrode eine Schlitzelektrode sind; wobei das Array-Substrat ferner Gate-Leitungen und Datenleitungen, die auf dem Basissubstrat ausgebildet sind, aufweist; und wobei in der wenigstens einen Pixeleinheit zwei Unterpixel derselben Unterpixeleinheit dieselbe Gate-Leitung gemeinsam nutzen und durch unterschiedliche Datenleitungen gesteuert werden,
**dadurch gekennzeichnet, dass**
die wenigstens zwei Unterpixel (Sub₁, Sub₂) unterschiedliche anfängliche Verdrehungswinkel haben und der anfängliche Verdrehungswinkel ein Winkel ist, der in dem jeweiligen Unterpixel zwischen einer Richtung eines Schlitzes der Schlitzelektrode und einer Richtung, in der Hauptachsen von Flüssigkristallmolekülen orientiert sind, wenn die Flüssigkristallschicht in einem leistungslosen Zustand ist, enthalten ist.

2. Array-Substrat nach Anspruch 1, wobei die wenigstens zwei Unterpixel Folgendes umfassen: ein erstes Unterpixel (Sub₁) und ein zweites Unterpixel (Sub₂);
wobei das erste Unterpixel (Sub₁) einen anfänglichen Verdrehungswinkel θ1 besitzt; das zweite Unterpixel (Sub₂) einen anfänglichen Verdrehungswinkel θ2 besitzt; und sowohl θ1 als auch θ2 kleiner als 15° ist.

3. Array-Substrat nach Anspruch 2, wobei θ1 und θ2 zwei unterschiedliche Werte haben, die aus der Gruppe gewählt sind, die aus 5°, 7° und 11° besteht.

4. Array-Substrat nach einem der Ansprüche 1-3, wobei die mehreren Unterpixeleinheiten Folgendes umfassen: eine rote Unterpixeleinheit (Sub_{R}), eine grüne Unterpixeleinheit (Sub_{G}) und eine blaue Unterpixeleinheit (Sub_{B});
wobei die rote Unterpixeleinheit ein erstes rotes Unterpixel (Sub_{R_1}) und ein zweites rotes Unterpixel (Sub_{R_2}), die verschiedene anfängliche Verdrehungswinkel haben, umfasst;
wobei das grüne Unterpixel ein erstes grünes Unterpixel (Sub_{G_1}) und ein zweites grünes Unterpixel (Sub_{G_2}), die verschiedene anfängliche Verdrehungswinkel haben, umfasst; und
wobei die blaue Unterpixeleinheit ein erstes blaues Unterpixel (Sub_{B_1}) und ein zweites blaues Unterpixel (Sub_{B_2}), die verschiedene anfängliche Verdrehungswinkel haben, umfasst.

5. Array-Substrat nach Anspruch 4, wobei
das erste rote Unterpixel (Sub_{R_1}), das erste grüne Unterpixel (Sub_{G_1}) und das erste blaue Unterpixel (Sub_{B_1}) denselben anfänglichen Verdrehungswinkel θ1 haben; und
das zweite rote Unterpixel (Sub_{R_2}), das zweite grüne Unterpixel (Sub_{G_2}) und das zweite blaue Unterpixel (Sub_{B_2}) denselben anfänglichen Verdrehungswinkel θ2 haben.

6. Array-Substrat nach Anspruch 5, wobei
zwei Unterpixel (Sub₁, Sub₂) derselben Unterpixeleinheit in einer ersten Richtung angeordnet sind; und
derselbe Typ Unterpixel (Sub₁ oder Sub₂) unterschiedlicher Unterpixeleinheiten nacheinander in einer zweiten Richtung angeordnet sind, die weder mit der ersten Richtung zusammenfällt noch hierzu parallel ist, wobei die ersten Unterpixel (Sub₁) und die zweiten Unterpixel (Sub₂) verschiedener Unterpixeleinheiten in der zweiten Richtung abwechselnd angeordnet sind oder die ersten Unterpixel (Sub₁) und die zweiten Unterpixel (Sub₂) verschiedener Unterpixeleinheiten in der zweiten Richtung zufällig angeordnet sind.

7. Array-Substrat nach Anspruch 6,
wobei die ersten Richtung in der Richtung der Datenleitungen orientiert ist und die zweite Richtung in der Richtung der Gate-Leitungen orientiert ist.

8. Array-Substrat nach Anspruch 6, wobei das Array-Substrat ein Array-Substrat mit einem IPS-Modus oder mit einem FFS-Modus ist;
wobei das Unterpixel (Sub₁ oder Sub₂) der Pixeleinheit Folgendes umfasst: eine Pixelelektrode und eine gemeinsame Elektrode, die durch eine Isolierschicht getrennt sind; wobei die erste Elektrode entweder die Pixelelektrode oder die gemeinsame Elektrode ist; und die zweite Elektrode die jeweils andere der Pixelelektrode und der gemeinsamen Elektrode ist.

9. Anzeigevorrichtung, **gekennzeichnet durch** das Array-Substrat nach einem der Ansprüche 1-8.

10. Verfahren zum Steuern der wenigstens einen Unterpixeleinheit des Array-Substrats, das in einem der Ansprüche 1 bis 8 definiert ist, wobei das Verfahren Folgendes umfasst:
einen Schritt A zum Ermitteln eines erforderlichen Anzeigeluminanzwertes der Unterpixeleinheit; und
einen Schritt B zum Auswählen eines entsprechenden Arbeitsmodus aus einer Gruppe von Anordnungen der wenigstens zwei Unterpixel (Sub₁, Sub₂) in Übereinstimmung mit dem erforderlichen Anzeigeluminanzwert der Unterpixeleinheit, wobei die wenigstens zwei Unterpixel Folgendes umfassen: ein erstes Unterpixel (Sub₁) und ein zweites Unterpixel (Sub₂), wobei das erste Unterpixel (Sub₁) einen anfänglichen Verdrehungswinkel θ1 besitzt, das zweite Unterpixel (Sub₂) einen anfänglichen Verdrehungswinkel θ2 besitzt und θ1 > θ2;
wobei der Schritt B Folgendes umfasst:
einen Unterschritt B1 zum Beurteilen, falls Δ < Δ2, ob die Unterpixeleinheit eine Anzeige mit niedriger Luminanz erfordert, und zum Steuern, damit nur das erste Unterpixels (Sub₁) der Unterpixeleinheit arbeitet;
einen Unterschritt B2 zum Beurteilen, falls Δ2 ≤ Δ < Δ1, ob die Unterpixeleinheit eine Anzeige mit hoher Luminanz erfordert, und zum Steuern, damit nur das zweite Unterpixel (Sub₂) der Unterpixeleinheit arbeitet;
einen Unterschritt B3 zum Beurteilen, falls Δ ≥ A1, ob die Unterpixeleinheit eine Anzeige mit hoher Luminanz erfordert, und zum Steuern, damit das erste Unterpixel (Sub₁) und das zweite Unterpixel (Sub₂) der Unterpixeleinheit gleichzeitig arbeiten;
wobei Δ der erforderliche Anzeigeluminanzwert der Unterpixeleinheit ist, Δ1 ein erster Luminanzschwellenwert ist, Δ2 ein zweiter Luminanzschwellenwert ist und Δ1 > Δ2.

## Revendications

1. Substrat matriciel comprenant :
un substrat de base ; et
une matrice de pixels unitaires (Pixel1,1 ; Pixel1,2 ; Pixel2,1 ; Pixel2,2) disposée sur le substrat de base et comprenant une pluralité de pixels unitaires disposés en matrice, au moins un pixel unitaire de la pluralité de pixels unitaires comprenant plusieurs sous-unités de pixel, au moins une des sous-unités de pixel comprenant au moins deux sous-pixels (Sub₁, Sub₂),
chacun des au moins deux sous-pixels (Sub₁, Sub₂) comprenant une première électrode, une deuxième électrode, et une couche de cristaux liquides agencée pour être commandée par une tension entre la première électrode et la deuxième électrode, au moins une électrode parmi la première électrode et la deuxième électrode étant une électrode à fentes ;
le substrat matriciel comprenant en outre des lignes de grille et des lignes de données formées sur le substrat de base, et dans lequel, dans l'au moins un pixel unitaire, deux sous-pixels de la même sous-unité de pixel partagent la même ligne de grille et sont commandés par différentes lignes de données, **caractérisé en ce que**
les au moins deux sous-pixels (Sub₁, Sub₂) ont différents angles de torsion initiaux, et l'angle de torsion initial est un angle inclus entre une direction d'une fente de l'électrode à fentes et une direction où des axes principaux de molécules de cristaux liquides sont orientés quand la couche de cristaux liquides est dans un état non alimenté, dans le sous-pixel respectif.

2. Substrat matriciel de la revendication 1, dans lequel les au moins deux sous-pixels comprennent un premier sous-pixel (Sub₁) et un deuxième sous-pixel (Sub₂) ;
dans lequel le premier sous-pixel (Sub₁) a un angle de torsion initial θ₁, le deuxième sous-pixel (Sub₂) a un angle de torsion initial θ₂, et θ₁ et θ₂ sont tous deux inférieurs à 15°.

3. Substrat matriciel de la revendication 2, dans lequel θ₁ et θ₂ sont deux angles différents choisis dans un groupe constitué par 5°, 7°, 11°.

4. Substrat matriciel de l'une quelconque des revendications 1 à 3, dans lequel les sous-unités de pixel comprennent une sous-unité de pixel rouge (Sub_{R}), une sous-unité de pixel verte (Sub_{G}) et une sous-unité de pixel bleue (Sub_{B});
la sous-unité de pixel rouge comprend un premier sous-pixel rouge (Sub_{R_1}) et un deuxième sous-pixel rouge (Sub_{R_2}) ayant différents angles de torsion initiaux ;
la sous-unité de pixel verte comprend un premier sous-pixel vert (Sub_{G_1}) et un deuxième sous-pixel vert (Sub_{G_2}) ayant différents angles de torsion initiaux ; et
la sous-unité de pixel bleue comprend un premier sous-pixel bleu (Sub_{B_1}) et un deuxième sous-pixel bleu (Sub_{B_2}) ayant différents angles de torsion initiaux.

5. Substrat matriciel de la revendication 4, dans lequel
le premier sous-pixel rouge (Sub_{R_1}), le premier sous-pixel vert (Sub_{G_1}) et le premier sous-pixel bleu (Sub_{B_1}) ont le même angle de torsion initial θ₁; et
le deuxième sous-pixel rouge (Sub_{R_2}), le deuxième sous-pixel vert (Sub_{G_2}) et le deuxième sous-pixel bleu (Sub_{B_2}) ont le même angle de torsion initial θ₂.

6. Substrat matriciel de la revendication 5, dans lequel
deux sous-pixels (Sub₁, Sub₂) de la même sous-unité de pixel sont disposés dans une première direction ; et
le même type de sous-pixels (Sub₁ ou Sub₂) de différentes sous-unités de pixel est disposé successivement dans une deuxième direction qui n'est ni coïncidente, ni parallèle à la première direction, les premiers sous-pixels (Sub₁) et les deuxièmes sous-pixels (Sub₂) de différentes sous-unités de pixel sont disposés en alternance dans la deuxième direction, ou les premiers sous-pixels (Sub₁) et les deuxièmes sous-pixels (Sub₂) de différentes sous-unités de pixel sont disposés aléatoirement dans la deuxième direction.

7. Substrat matriciel de la revendication 6, dans lequel
la première direction est le long d'une direction des lignes de données et la deuxième direction est le long d'une direction des lignes de grille.

8. Substrat matriciel de la revendication 6, le substrat matriciel étant un substrat matriciel avec un mode IPS ou un mode FFS ;
dans lequel le sous-pixel (Sub₁ ou Sub₂) du pixel unitaire comprend une électrode de pixel et une électrode commune séparées par une couche d'isolation, la première électrode est soit l'électrode de pixel, soit l'électrode commune, et la deuxième électrode est l'autre électrode entre l'électrode de pixel et l'électrode commune.

9. Dispositif d'affichage, **caractérisé en ce qu'**il comprend le substrat matriciel de l'une quelconque des revendications 1 à 8.

10. Procédé de commande de ladite au moins une sous-unité de pixel du substrat matriciel défini dans l'une quelconque des revendications 1 à 8, le procédé comprenant :
une étape A d'acquisition d'une valeur de luminance d'affichage requise de sous-unité de pixel ; et
une étape B de sélection d'un mode de fonctionnement correspondant dans un groupe d'agencements des au moins deux sous-pixels (Sub₁, Sub₂), en fonction de la valeur de luminance d'affichage requise de sous-unité de pixel,
dans lequel les au moins deux sous-pixels comprennent un premier sous-pixel (Sub₁) et un deuxième sous-pixel (Sub₂), le premier sous-pixel (Sub₁) a un angle de torsion initial θ₁, le deuxième sous-pixel (Sub₂) a un angle de torsion initial θ₂, et θ₁ > θ₂;
l'étape B comprend :
une sous-étape B1 de jugement, si Δ < Δ2, que la sous-unité de pixel doit afficher à faible luminance, et la commande du fonctionnement uniquement du premier sous-pixel (Sub₁) de la sous-unité de pixel ;
une sous-étape B2 de jugement, si Δ2 ≤ Δ < Δ1, que la sous-unité de pixel doit afficher à luminance moyenne, et la commande du fonctionnement uniquement du deuxième sous-pixel (Sub₂) de la sous-unité de pixel ;
une sous-étape B3 de jugement, si Δ ≥ Δ1, que la sous-unité de pixel doit afficher à forte luminance, et la commande du fonctionnement simultané du premier sous-pixel (Sub₁) et du deuxième sous-pixel (Sub₂) de la sous-unité de pixel ;
dans lequel Δ est la valeur de luminance d'affichage requise de sous-unité de pixel, Δ1 est un premier seuil de luminance, Δ2 est un deuxième seuil de luminance, et Δ1 > Δ2.
